# EUROPÄISCHE PATENTSCHRIFT

(11) **EP 0 291 031 B1**
(45) Veröffentlichungstag und Bekanntmachung des Hinweises auf die Patenterteilung: **23.06.1993**
(21) Anmeldenummer: 88107540.2
(22) Anmeldetag: 11.05.1988
(51) Int. Cl.: B27B 5/16

(54) **Ständer für transportable Bearbeitungsgeräte**
Stand for transportable machine tools
Support pour machines-outils transportables

(30) Priorität: 15.05.1987 DE 3716258
(43) Veröffentlichungstag der Anmeldung: 17.11.1988
(73) Patentinhaber: Black & Decker Overseas AG, FL-9490 Vaduz (LI)
(72) Erfinder: Bergler, Otto, D- 7130 Mühlacker-Lomersheim (DE)
(74) Vertreter: Wilhelm, Hans-Herbert, Dr.-Ing.

(56) Entgegenhaltungen:
- EP-A- 0 133 666
- FR-A- 996 220
- FR-A- 2 462 246
- GB-A- 763 280
- GB-A- 2 171 618
- US-A- 4 341 247
- US-A- 4 601 226

## Beschreibung

Die Erfindung betrifft einen Ständer für transportable Bearbeitungsgeräte nach dem Oberbegriff des Patentanspruches 1.

Es ist bekannt (DE-PS 29 31 559), kombinierte Tisch- und Gehrungssägen, deren Werkstückauflagetisch schwenkbar zwischen zwei Seitenwangen gehalten ist, mit anschraubbaren Stützfüßen zu versehen, damit das sonst mit diesen Seitenwangen auf dem Boden oder auf einem Tisch aufstellbare Sägeaggregat mit seinem Werkstückauflagetisch auch in Tischhöhe stationär angeordnet werden kann. Die anschraubbaren Standfüße sind leicht abnehmbar und behindern so die Transportierbarkeit des bekannten Sägeaggregates nicht.

Auch bei anderen Bearbeitungsgeräten, beispielsweise Kapp- und Gehrungssägen, die im Innenausbau aber auch auf Baustellen eingesetzt werden sollen, ist es erwünscht, ein Untergestell zur Verfügung zu haben, das eine stabile Lagerung des Bearbeitungsgerätes ermöglicht, ohne jedoch die Transportierbarkeit zu beeinflussen. Die bisher bekannten zusammenklappbaren Tische, die in der Regel wesentlich größer dimensioniert sind als die darauf gestellten oder daran befestigten Bearbeitungsgeräte, sind selbst sehr sperrig und aufwendig in der Herstellung. Auch ihr Gewicht ist in der Regel zu groß, um der Forderung nach leichter Transportierbarkeit aber auch nach einfachem Zusammenbau zu entsprechen.

Der Erfindung liegt daher die Aufgabe zugrunde, ein einfaches System für einen stabilen und mobilen Ständer zum Aufstellen von halbstationären Bearbeitungsgeräten zu schaffen.

Zur Lösung dieser Aufgabe werden bei einem Ständer der eingangs genannten Art die kennzeichnenden Merkmale des Patentanspruches 1 vorgesehen. Durch die seitliche Anordnung von Traversen an dem Auflagetisch bzw. an dem für diesen Zweck vorgesehenen Gehäuse wird die Basis für die Anordnung von Standfüßen auch bei sehr kleinen Bearbeitungsgeräten entscheidend vergrößert. Mit einfachen Mitteln läßt sich dadurch ein stabiler Ständer verwirklichen.

Besonders einfach wird es, wenn die Quertraversen jeweils mit Hilfe von zwei parallelen Führungsstangen am Bearbeitungsgerät gehalten werden, die ihrerseits in Klemmbohrungen am Auflagetisch oder am Gehäuse gehalten sind. Solche Führungsstangen sind bei bestimmten Geräten zum Ansetzen von Zusatzauflagetischen oder anderen Zusatzgeräten ohnehin vorgesehen. Sie lassen sich in besonders einfacher Weise dazu ausnutzen, beispielsweise durch je eine quer zur Längsachse der Quertraverse geführte Bohrung durchgeschoben und dort verklemmt zu werden. Dabei können in einfacher Weise sowohl für die Quertraversen als auch für die Standfüße Rundrohre vorgesehen werden, die ein geringes Gewicht aufweisen und die daher der Forderung nach leichter Transportierbarkeit entsprechen. Die Standfüße selbst lassen sich in einfacher Weise durch Befestigungsschrauben an den Quertraversen anbringen. Die Quertraversen können bei einer besonders vorteilhaften Ausführungsform auch noch so bemessen werden, daß ihre Oberflächen jeweils mit der Auflagefläche des Auflagetisches fluchten. Die Quertraversen stellen so eine Erweiterung der Auflagemöglichkeit für Werkstücke, beispielsweise für Latten oder Bretter dar. Bei dieser Ausführungsform, muß darauf geachtet werden,daß Befestigungsschrauben für die Standfüße nicht über diese Oberseite der Quertraversen nach oben vorstehen. Da bei dieser Ausführungsform beidseitig des Auflagetisches und im Abstand dazu die Quertraversen vorgesehen sind, entsteht zum einen eine stabile Standbasis für das Bearbeitungsgerät, zum anderen ergeben sich aber auch einfache Möglichkeiten zum Vergrößern der Auflagefläche. Diese kann, weil sich die Quertraversen an den Führungsstangen verschieben lassen, auf verschiedene Größen eingestellt werden. Nach dem Abnehmen der Standfüße, dem Lösen der Quertraversen, die jeweils nur an den Führungsstangen angeklemmt sind, und nach Abnahme der Führungsstangen, ergibt sich zusätzlich zum Bearbeitungsgerät ein handliches und leichtes Stangenpaket, das die gesamte Untergestellausführung enthält.

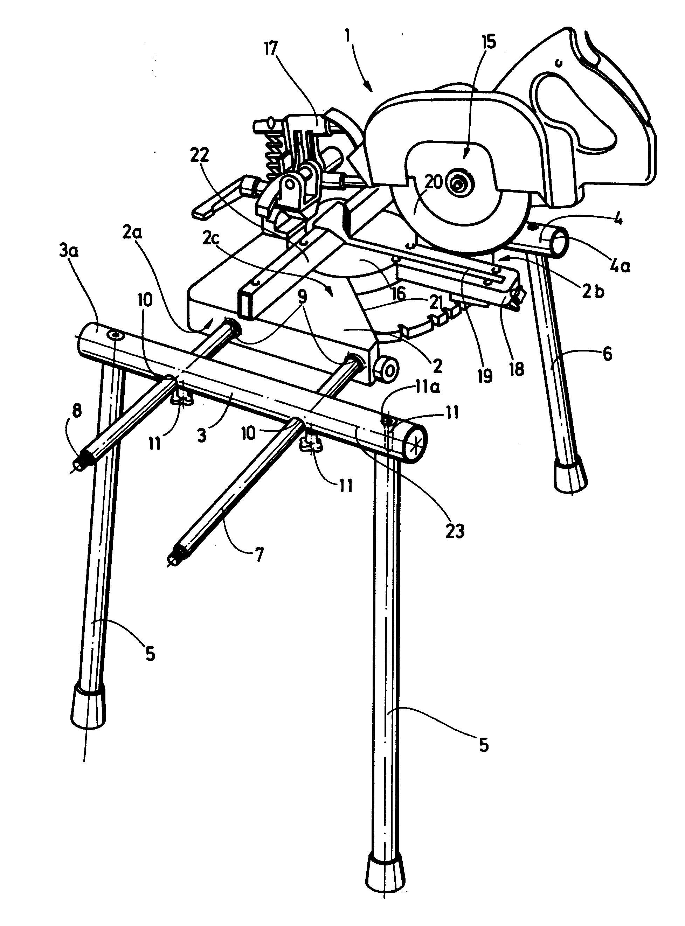

Die Erfindung ist anhand eines Ausführungsbeispieles in der Zeichnung dargestellt und wird im folgenden erläutert:
Die einzige Zeichnung zeigt ein Bearbeitungsgerät (1) in der Form einer Kapp- und Gehrungssäge (15), die schwenkbar an einem Rundtisch (16) mit Hilfe eines Schwenkarmes (17) gehalten ist. Der Rundtisch (16) weist eine Verlängerung (18) auf, die ebenso wie der Rundtisch (16) selbst mit einem Eintauchschlitz (19) für das Sägeblatt (20) versehen ist. Durch Verschwenken des Rundtisches (16) und des Verlängerungsarmes (18) bis zum Anschlag an den Anschlagflächen (21) eines Auflagetisches (2) lassen sich daher mit dem Bearbeitungsgerät (1) Gehrungsschnitte ausführen, die an Werkstücken auf den Auflagetisch (2) aufgelegt und an den Festanschlag (22) angedrückt werden. Der in der Form einer Platte ausgebildete Auflagetisch (2) weist auf beiden gegenüberliegenden Seiten (2a und 2b) jeweils Bohrungen (9) auf, in denen Führungsstangen (7 und 8) durch Klemmschrauben gehalten sind. Diese Führungsstangen (7 und 8) verlaufen parallel und sind jeweils durch eine Bohrung (10) geführt, die quer zur Längsachse (23) eines als Quertraverse (3) ausgebildeten Rundrohres verlaufen. Die Anordnung auf der anderen Seite (2b) des Auflagetisches (2) ist analog. Die dort vorgesehene Quertraverse (4) ist in ebensolcher Weise mit dem Auflagetisch (2) verbunden.

Die Bohrungen (10), die jeder Quertraverse (3) zugeordnet sind, sind von Hand betätigbare Klemmschrauben (11),die dafür sorgen, daß die Führungsstangen (7,8) in ihrer Lage innerhalb der Quertraversen (3 bzw. 4) verklemmt werden, wenn die gewünschte Abstandslage der Quertraversen (3 bzw. 4) von den jeweiligen Seitenflächen (2a bzw. 2b) eingestellt ist. An jeder Quertraverse (3 bzw. 4) sind dann Standfüße (5 bzw. 6) befestigt, dadurch, daß beispielsweise Befestigungsschrauben (11) von oben durch die Quertraverse (3) hindurchgeführt und in nicht gezeigten Rundmuttern in den Standfüßen (5) gehalten sind, welche fest mit den Standfüßen verbunden sind.

Beim gezeigten Ausführungsbeispiel sind die Abmessungen der Quertraversen (3 und 4) so gewählt, daß die Oberseite (3a bzw. 4a) der Quertraversen (3 bzw. 4) jeweils mit der Oberfläche (2c) des Auflagetisches (2) fluchten. Die Quertraversen (3 bzw. 4) dienen daher beim Ausführungsbeispiel als zusätzliche Auflageflächen für zu bearbeitende Werkstücke. Da der Abstand der Quertraversen (3 bzw. 4) vom Werkstückauflagetisch (2) durch Verschieben längs der Säulen (7, 8) wählbar ist, ist sowohl die Aufstellbasis für die Standfüße (5 bzw. 6) als auch die Größe der Auflageflächen für zu bearbeitende Werkstücke einstellbar.

Wie ohne weiteres ersichtlich ist, läßt sich der aus den Quertraversen (3, 4), aus den Standfüßen (5, 6) und aus den zur Befestigung dienenden Führungsstangen (7, 8) aufgebaute Ständer sehr leicht zerlegen. Da die Quertraversen (3 bzw. 4) und die Standfüße (5 bzw. 6) als einfache Stahl- oder auch Aluminiumrohre ausgebildet sein können, lassen sich diese Rohre zu einem handlichen Paket zusammenpacken, das mit dem Bearbeitungsgerät (1) selbst in einfacher Weise transportiert und an Ort und Stelle und bei Bedarf sehr leicht zusammengesetzt werden kann. Das Bearbeitungsgerät (1) kann dann in der Art einer stationären Bearbeitungsmaschine eingesetzt werden. Trotzdem ist die Mobilität nicht beeinträchtigt.

## Patentansprüche

1. Ständer für transportable Bearbeitungsgeräte, insbesondere für Kapp- und Gehrungssägen, die mit einem Auflagetisch für die Werkstücke versehen sind, wobei zwei jeweils auf gegenüberliegenden Seiten des Auflagetisches fest ansetzbare Quertraversen vorgesehen sind, die mit Einrichtungen zum Befestigen von Standfüßen versehen sind, dadurch gekennzeichnet, daß die Quertraversen (3, 4) mit Hilfe von je zwei parallelen Führungsstangen (7, 8) am Auflagetisch (2) befestigbar sind, die fest in Führungsbohrungen (9) am Auflagetisch (2) verklemmt sind.

2. Ständer nach Anspruch 1, dadurch gekennzeichnet, daß die Führungsstangen (7, 8) durch Bohrungen (10) in den Quertraversen (3, 4) geführt und dort mit Befestigungsschrauben (11) gehalten sind.

3. Ständer nach den Ansprüchen 1 und 2, dadurch gekennzeichnet, daß je zwei Standfüße (5, 6) abnehmbar mit jeder Quertraverse (3, 4) verbunden sind.

4. Ständer nach einem der Ansprüche 1 bis 3, dadurch gekennzeichnet, daß die Standfüße (5, 6) an der Quertraverse (3, 4) verschraubt sind.

5. Ständer nach einem der Ansprüche 1 bis 4, dadurch gekennzeichnet, daß die Quertraversen (3, 4) solche Abmessungen besitzen, daß ihre Oberseiten (3a, 4a) mit der Oberfläche (2c) des Auflagetisches (2) fluchten.

6. Ständer nach den Ansprüchen 4 und 5, dadurch gekennzeichnet, daß die Befestigungsschrauben (11) der Standfüße, die in eine fest mit den Standfüßen (5, 6) verbundene Mutter eingreifen, die Quertraversen (3, 4) durchsetzen, ihre Köpfe (11a) aber versenkt in den Quertraversen (3, 4) angeordnet sind.

7. Ständer nach einem der Ansprüche 1 bis 6, dadurch gekennzeichnet, daß die Quertraversen (3, 4) und die Standfüße (5, 6) als Rundrohre ausgebildet sind.

## Claims

1. Stand for portable machining devices, in particular for circular cross-cut saws and mitre-box saws which are provided with a support table for the workpieces, two cross arms which may be rigidly fixed on opposing sides of the support table in each case and comprise devices for fastening feet being provided, characterised in that the cross arms (3, 4) may be fastened on the support table (2) by means of two respective parallel guide rods (7, 8) which are rigidly clamped in guide holes (9) on the support table (2).

2. Stand according to claim 1, characterised in that the guide rods (7, 8) are guided through holes (10) in the cross arms (3, 4) and are held there by fastening screws (11).

3. Stand according to claims 1 and 2, characterised in that two respective feet (5, 6) are detachably connected to each cross arm (3, 4).

4. Stand according to one of claims 1 to 3, characterised in that the feet (5, 6) are screwed on the cross arms (3, 4).

5. Stand according to one of claims 1 to 4, characterised in that the cross arms (3, 4) have dimensions which are such that their upper sides (3a, 4a) are aligned with the surface (2c) of the support table (2).

6. Stand according to claims 4 and 5, characterised in that the fastening screws (11) of the feet, which engage in a nut rigidly connected to the feet (5, 6) pass through the cross arms (3, 4) whereas their heads (11a) are countersunk in the cross arms (3, 4).

7. Stand according to one of claims 1 to 6, characterised in that the cross arms (3, 4) and the feet (5, 6) are designed as round tubes.

## Revendications

1. Support pour machines-outils transportables notamment pour scies capotées et a onglet, qui sont munies d'une table support pour les pièces, présentant deux traverses transversales qu'on peut immobiliser de chaque côté de la table support, qui sont munies de dispositifs pour fixer les pieds supports, caractérisé en ce que les traverses transversales (3, 4) peuvent être immobilisées à l'aide de deux tiges de guidage parallèles (7, 8) à la table support (2), qui sont verrouillées dans des trous de guidage (9) sur la table support (2).

2. Support selon la revendication 1, caractérisé en ce que les tiges de guidage (7, 8) sont guidées par des trous (10) dans les traverses transversales (3, 4) et qu'on les y maintient par des vis de serrage (11).

3. Support selon les revendications 1 et 2, caractérisé en ce que deux pieds supports (5, 6) sont fixés de façon amovible à chaque traverse transversale (3, 4).

4. Support selon l'une des revendications 1 à 3, caractérisé en ce que les pieds support (5, 6) sont vissés à la traverse transversale (3, 4).

5. Support selon l'une des revendications 1 à 4, caractérisé en ce que les traverses transversales (3, 4) possèdent des dimensions telles que leurs faces supérieures (3a, 4a) s'alignent avec la surface (2c) de la table support (2).

6. Support selon les revendications 4 et 5, caractérisé en ce que les vis de fixation (11) des pieds support viennent en prise dans un écrou solidaire des pieds supports (5, 6), elles traversent les traverses transversales (3, 4), leurs têtes (11a) sont noyées dans les traverses transversales (3, 4).

7. Support selon l'une des revendications 1 à 6, caractérisé en ce que les traverses transversales (3, 4) et les pieds supports (5, 6) sont des tubes ronds.
